# EUROPÄISCHE PATENTSCHRIFT

(11) **EP 3 044 026 B1**
(45) Veröffentlichungstag und Bekanntmachung des Hinweises auf die Patenterteilung: **25.08.2021**
(21) Anmeldenummer: 14781100.4
(22) Anmeldetag: 24.09.2014
(51) Int. Cl.: B60L 7/28

(54) **ANORDNUNG ZUM KÜHLEN EINER ROTIERENDEN WIRBELSTROMBREMSE EINES SCHIENENFAHRZEUGS**
ARRANGEMENT FOR COOLING A ROTATING EDDY CURRENT BRAKE OF A RAIL VEHICLE
ENSEMBLE POUR LE REFROIDISSEMENT D'UN FREIN À COURANTS DE FOUCAULT ROTATIF D'UN VÉHICULE FERROVIAIRE

(30) Priorität: 23.10.2013 DE 102013221561
(43) Veröffentlichungstag der Anmeldung: 20.07.2016
(73) Patentinhaber: Siemens Mobility GmbH, 81739 München (DE)
(72) Erfinder: SCHMITT, Volker, 91052 Erlangen (DE); ZEBUNKE, Stefan, 96199 Zapfendorf (DE); DRAGE, Peter, 8043 Graz (AT); GABRIEL, Aaron, 7100 Neusiedl am See (AT); SEIWALD, Andreas, A-6306 Söll Tirol (AT); SUZZI, Daniele, 8160 Gutenberg-Stenzengteith (AT); TEICHMANN, Martin, A-8045 Graz (AT)
(86) Internationale Anmeldenummer: PCT/EP2014/070314
(87) Internationale Veröffentlichungsnummer: WO 2015/058920

(56) Entgegenhaltungen:
- EP-A2- 0 531 721
- WO-A2-02/43229
- DE-A1- 1 934 750
- DE-C- 748 294

## Beschreibung

Die Erfindung betrifft eine Anordnung zum Kühlen einer rotierenden Wirbelstrombremse eines Schienenfahrzeugs, wobei die Anordnung die rotierende Wirbelstrombremse umfasst und diese wenigstens einen mit einer Achse eines Drehgestells des Schienenfahrzeugs drehfest verbundenen Rotor und wenigstens einen stationär an dem Drehgestell angeordneten Stator umfasst.

Wirbelstrombremsen werden insbesondere zum Bremsen von Schienenfahrzeugen eingesetzt. Hierzu können Wirbelstrombremsen an Drehgestellen von Schienenfahrzeugen angeordnet werden. Es sind sowohl lineare Wirbelstrombremsen, bei denen ein mit Wirbelströmen beaufschlagtes Bauteil durch eine Schiene eines von einem Schienenfahrzeug befahrenen Gleises ausgebildet wird, als auch rotierende Wirbelstrombremsen bekannt, bei denen entweder ein mit Wirbelströmen beaufschlagtes Bauteil oder ein ein Magnetfeld erzeugendes Bauteil drehfest mit einer Achse eines Drehgestells eines Schienenfahrzeugs verbunden ist, während das jeweilig andere Bauteil der rotierenden Wirbelstrombremse stationär an dem Drehgestell angeordnet ist.

Wirbelstrombremsen wandeln bei einem Bremsvorgang kinetische Energie in Wärmeenergie um. Hierbei erwärmt sich das mit Wirbelströmen beaufschlagte Bauteil einer Wirbelstrombremse derart, dass es zu Materialbeeinträchtigungen an diesem Bauteil und schlimmstenfalls zu einem Versagen der rotierenden Wirbelstrombremse kommen kann.

Herkömmlich wird eine an einem Drehgestell eines Schienenfahrzeugs angeordnete rotierende Wirbelstrombremse lediglich mittels eines Fahrtwindes gekühlt. Wie sich gezeigt hat, stellt diese Fahrtwindkühlung eine unzureichende Kühlung der rotierenden Wirbelstrombremse dar. Insbesondere bei mit Drehgestellverkleidungen versehenen Schienenfahrzeugen gelangt kaum Fahrtwind in den Bereich einer an einem Drehgestell angeordneten rotierenden Wirbelstrombremse. Stattdessen staut sich die bei einem Bremsvorhang erzeugte Wärme gewissermaßen in einer im Bereich eines Drehgestells an dem Schienenfahrzeug ausgebildeten, bodenseitigen Kavität.

Aus der deutschen Patentschrift DE 748 294 C ist eine Wirbelstrombremse mit außenliegendem Anker bekannt, wobei der Anker aus einzelnen eisernen Platten besteht. Zwischen diesen Platten sind Schlitze angeordnet zum Durchlassen von Kühlluft, die vom Innenpolsystem oder einer Lüftereinrichtung erzeugt wird.

Eine an einem Drehgestell angeordnete Wirbelstrombremse ist aus der Offenlegungsschrift DE 19 34 750 A1 bekannt. Ferner wird in der veröffentlichten europäischen Patentanmeldung EP 0 531 721 A2 eine Kühlung einer Wirbelstrombremse durch den Fahrtwind erwähnt.

Aufgabe der vorliegenden Erfindung ist es, eine Möglichkeit zum Kühlen einer an einem Drehgestell eines Schienenfahrzeugs angeordneten, rotierenden Wirbelstrombremse zu schaffen.

Die Lösung der Aufgabe erfolgt durch die Merkmale der unabhängigen Ansprüche. Vorteilhafte Ausgestaltungen sind in den Unteransprüchen angegeben.

Die erfindungsgemäße Anordnung zum Kühlen einer rotierenden Wirbelstrombremse eines Schienenfahrzeugs, wobei die Anordnung die rotierende Wirbelstrombremse umfasst und diese wenigstens einen mit einer Achse eines Drehgestells des Schienenfahrzeugs drehfest verbundenen Rotor und wenigstens einen stationär an dem Drehgestell angeordneten Stator umfasst, weist wenigstens ein die rotierende Wirbelstrombremse umgebend an dem Drehgestell angeordnetes Gehäuse auf, wobei an dem Gehäuse wenigstens eine Lufteintrittsöffnung, über die Luft in das Gehäuse eintreten kann, und zumindest eine Luftaustrittsöffnung, über die Luft aus dem Gehäuse austreten kann, angeordnet sind.

Während einer Fahrt eines mit einer erfindungsgemäßen Anordnung versehenen Schienenfahrzeugs strömt Luft in Form eines Fahrtwindes an der Luftaustrittsöffnung des Gehäuses vorbei. Der in dem Fahrtwind herrschende statische Druck ist deutlich geringer als der statische Druck in der in dem Gehäuse vorhandenen Luft, wodurch mittels des an der Luftaustrittsöffnung vorbeiströmenden Fahrtwindes ein Sog im Bereich der Luftaustrittsöffnung ausbildet wird. Hierdurch wird Luft aus der Luftaustrittsöffnung aus dem Gehäuse herausgesogen und gleichzeitig über die Lufteintrittsöffnung Luft in das Gehäuse hineingesogen. Dies macht eine effektive Luftkühlung der in dem Gehäuse angeordneten rotierenden Wirbelstrombremse möglich, ohne dass zur Förderung von Luft durch das Gehäuse ein Gebläse oder ähnliches eingesetzt werden müsste.

Durch die Luftaustrittsöffnung und die Lufteintrittsöffnung bzw. die relative Anordnung dieser Öffnungen zueinander und zum übrigen Gehäuse kann innerhalb des Gehäuses die durch das Gehäuse strömende Luft gezielt geführt werden, um beispielsweise bestimmten in dem Gehäuse angeordneten Komponenten bzw. Abschnitten der Wirbelstrombremse eine zu deren Kühlung ausreichende Menge an Luft zuführen zu können. Vorzugsweise wird bei der Ausgestaltung der Luftführung innerhalb des Gehäuses berücksichtigt, dass der Rotor im Betrieb deutlich stärker als der Stator erwärmt wird. Beispielsweise kann ein Rotor bis über 600 °C und ein Stator bis maximal 200 bis 250 °C erwärmt werden. Eine Kühlluft, die den Rotor kühlt, sollte daher direkt zur Luftaustrittsöffnung geführt werden, um nicht in Kontakt mit dem Stator zu gelangen. Hingegen könnte eine Kühlluft, welche den Stator kühlt, zur Kühlung des Rotors verwendet werden, bevor sie aus dem Gehäuse austritt.

Über die Lufteintrittsöffnung kann Luft aus einer an einem Wagenkasten eines Schienenfahrzeugs bodenseitig ausgebildeten Kavität abgesaugt werden, in der das Drehgestell mit der zu kühlenden rotierenden Wirbelstrombremse angeordnet ist. Hierdurch kann ein Hitzestau innerhalb der Kavität vermieden werden.

Nach einer vorteilhaften Ausführungsform weist die Anordnung zumindest einen durch eine Öffnung an einer das Drehgestell nach außen zumindest teilweise verkleidenden Drehgestellverkleidung des Schienenfahrzeugs ausgebildeten Luftauslass auf, wobei das Gehäuse derart ausgebildet und an dem Drehgestell angeordnet ist, dass die Luftaustrittsöffnung fluidleitend mit dem Luftauslass verbunden ist. Während einer Fahrt eines mit einer entsprechenden Anordnung versehenen Schienenfahrzeugs strömt Luft in Form eines Fahrtwindes an dem an der Drehgestellverkleidung ausgebildeten Luftauslass vorbei. Der in dem Fahrtwind herrschende statische Druck ist deutlich geringer als der statische Druck in der in dem Gehäuse vorhandenen Luft, wodurch mittels des an der Öffnung vorbeiströmenden Fahrtwindes ein Sog auf der Außenseite der Drehgestellverkleidung ausbildet wird. Hierdurch wird Luft aus der Luftaustrittsöffnung aus dem Gehäuse herausgesogen und gleichzeitig über die Lufteintrittsöffnung Luft in das Gehäuse hineingesogen. Dies macht eine noch effektivere Luftkühlung der in dem Gehäuse angeordneten rotierenden Wirbelstrombremse möglich, ohne dass zur Förderung von Luft durch das Gehäuse ein Gebläse oder ähnliches eingesetzt werden müsste.

Gemäß einer weiteren vorteilhaften Ausführungsform greift ein die Luftaustrittsöffnung bildender Abschnitt des Gehäuses bei Anordnung des Gehäuses an dem Drehgestell derart in die an der Drehgestellverkleidung ausgebildete Öffnung ein, dass die Luftaustrittsöffnung bündig mit einer dem Drehgestell abgewandten Außenseite der Drehgestellverkleidung abschließt. Dies stellt eine technisch einfach zu realisierende Ausgestaltung der Anordnung dar.

Nach einer weiteren vorteilhaften Ausgestaltung weist die Anordnung an einer dem Stator abgewandten Seite des Rotors im Wesentlichen radial verlaufend angeordnete Kühlrippen auf. Bei Drehung des Rotors um die Achse des Drehgestells kann mittels der Kühlrippen der Luftstrom durch das Gehäuse unterstützt und/oder verstärkt werden. Die jeweilige Anzahl und Formgebung der Kühlrippen hängt von den jeweiligen technischen Anforderungen und Gegebenheiten ab.

Bevorzugt ist wenigstens eine Kühlrippe eben ausgebildet und senkrecht zu der Seite des Rotors angeordnet, an der die Kühlrippen angeordnet sind. Diese Ausgestaltung bewirkt, dass es für die Förderung von Luft durch das Gehäuse mittels der Kühlrippen nicht darauf ankommt, in welche Richtung der mit den Kühlrippen versehene Rotor gedreht wird bzw. in welche Richtung das entsprechend ausgestattete Schienenfahrzeug fährt. Die Kühlrippen können auch spiegelsymmetrisch an dem Rotor angeordnet sein.

Eine weitere vorteilhafte Ausgestaltung sieht vor, dass die Lufteintrittsöffnung derart an dem Gehäuse angeordnet ist, dass sie bei an dem Drehgestell angeordnetem Gehäuse unmittelbar benachbart zu dem Rotor angeordnet ist. Diese axiale Anordnung der Lufteintrittsöffnung ist insbesondere bei einem mit Kühlrippen versehenen Rotor von Vorteil. Eine axial angeordnete Lufteintrittsöffnung kann neben dem mit Kühlrippen versehenen Rotor angeordnet sein. Alternativ kann die Lufteintrittsöffnung radial achsnäher als der Rotor angeordnet sein, was insbesondere der Fall sein kann, wenn der Rotor nicht unmittelbar mit der jeweiligen Achse sondern über ein Verbindungselement drehfest mit der Achse verbunden ist.

Nach einer weiteren vorteilhaften Ausführungsform weist die Anordnung wenigstens eine Schließeinheit zum wahlweisen Verschließen und Freigeben der Lufteintrittsöffnung oder der Luftaustrittsöffnung auf. Hierdurch kann eine mit der Anbringung der Anordnung an einem Schienenfahrzeug verbundene strömungsbedingte Verlustleistung im Fahrbetrieb ohne Bremsaktivität bei kalter oder abgekühlter rotierender Wirbelstrombremse reduziert werden. Hierzu kann die Temperatur der rotierenden Wirbelstrombremse überwacht werden. Die Schließeinheit kann mittels einer elektronischen Steuerung auf Basis dieser Überwachung angesteuert werden. Es kann auch sowohl an der Lufteintrittsöffnung als auch an der Luftaustrittsöffnung jeweils eine entsprechende Schließeinheit angeordnet sein.

Vorzugsweise weist die Schließeinheit wenigstens eine Schließklappe und zumindest eine zum Betätigen der Schließklappe eingerichtete Betätigungseinrichtung auf. Die Betätigungseinrichtung kann kommunikationstechnisch mit einer elektronischen Fahrzeugsteuerung eines entsprechend ausgestatteten Schienenfahrzeugs verbunden sein, um die Schließklappe zu betätigen. Sie kann vorteilhaft auch selbsttätig, beispielsweise bei Bestromung des Stators der rotierenden Wirbelstrombremse, bei Abfall des Drucks in einer Hauptluftleitung einer Bremse oder bei Abfallen einer Schnellbremsscheife, betätigt werden. Die Betätigungseinrichtung kann ein Kraftglied, beispielsweise eine Zugfeder oder eine Druckfeder, aufweisen, mit dem die Schließklappe in Richtung ihrer die jeweilige Öffnung verschließenden Schließstellung mit Kraft beaufschlagt wird.

Das erfindungsgemäße Schienenfahrzeug umfasst wenigstens eine Anordnung nach einer der vorgenannten Ausgestaltungen oder einer beliebigen Kombination derselben. Hiermit sind die oben mit Bezug auf die Anordnung genannten Vorteile entsprechend verbunden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den schematischen Zeichnungen näher erläutert werden. Es zeigen:
- Figur 1: eine Darstellung eines Ausführungsbeispiels für ein erfindungsgemäßes Schienenfahrzeug,
- Figur 2: eine perspektivische Darstellung eines Gehäuses eines Ausführungsbeispiels für eine erfindungsgemäße Anordnung,
- Figur 3: eine perspektivische Darstellung eines Gehäuses eines weiteren Ausführungsbeispiels für eine erfindungsgemäße Anordnung,
- Figur 4: eine Darstellung eines weiteren Ausführungsbeispiels für ein erfindungsgemäßes Schienenfahrzeug, und
- Figur 5: eine Darstellung eines weiteren Ausführungsbeispiels für ein erfindungsgemäßes Schienenfahrzeug.

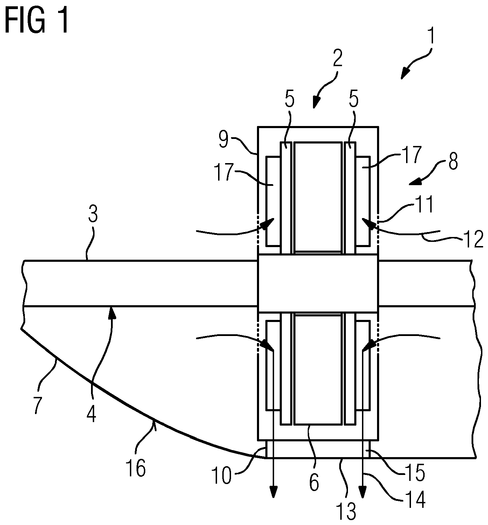

Figur 1 zeigt eine Darstellung eines Ausführungsbeispiels für ein erfindungsgemäßes Schienenfahrzeug 1. Das Schienenfahrzeug 1 umfasst eine rotierende Wirbelstrombremse 2, welche zwei mit einer Achse 3 eines Drehgestells 4 des Schienenfahrzeugs 1 drehfest verbundene Rotoren 5 und einen stationär an dem Drehgestell 4 angeordneten Stator 6 aufweist. Das Drehgestell 4 ist nach außen zumindest teilweise mit einer Drehgestellverkleidung 7 des Schienenfahrzeugs 1 verkleidet. Das Schienenfahrzeug 1 weist ferner eine Anordnung 8 zum Kühlen der rotierenden Wirbelstrombremse 2 auf.

Die Anordnung 8 umfasst ein die rotierende Wirbelstrombremse 2 umgebend an dem Drehgestell 4 angeordnetes Gehäuse 9 und zumindest einen durch eine Öffnung 10 an der Drehgestellverkleidung 7 ausgebildeten Luftauslass.

An dem Gehäuse 9 sind mehrere Lufteintrittsöffnungen 11, über die Luft in das Gehäuse 9 entsprechend den Pfeilen 12 eintreten kann, und eine Luftaustrittsöffnung 13, über die Luft aus dem Gehäuse 9 entsprechend den Pfeilen 14 austreten kann, angeordnet. Die Lufteintrittsöffnungen 11 sind derart axial an dem Gehäuse 9 angeordnet, dass sie unmittelbar benachbart zu den Rotoren 5 angeordnet sind.

Das Gehäuse 9 ist des Weiteren derart ausgebildet und an dem Drehgestell 4 angeordnet, dass die Luftaustrittsöffnung 13 fluidleitend mit dem Luftauslass verbunden ist. Hierzu greift ein die Luftaustrittsöffnung 13 bildender Abschnitt 15 des Gehäuses 9 derart in die an der Drehgestellverkleidung 7 ausgebildete Öffnung 10 ein, dass die Luftaustrittsöffnung 13 im Wesentlichen bündig mit einer dem Drehgestell 4 abgewandten Außenseite 16 der Drehgestellverkleidung 7 abschließt.

An den dem Stator 6 abgewandten Seiten der Rotoren 5 sind im Wesentlichen radial verlaufend angeordnete Kühlrippen 17 angeordnet, wobei die Kühlrippen 17 eben ausgebildet und senkrecht zu der Seite des jeweiligen Rotors 5 angeordnet sind.

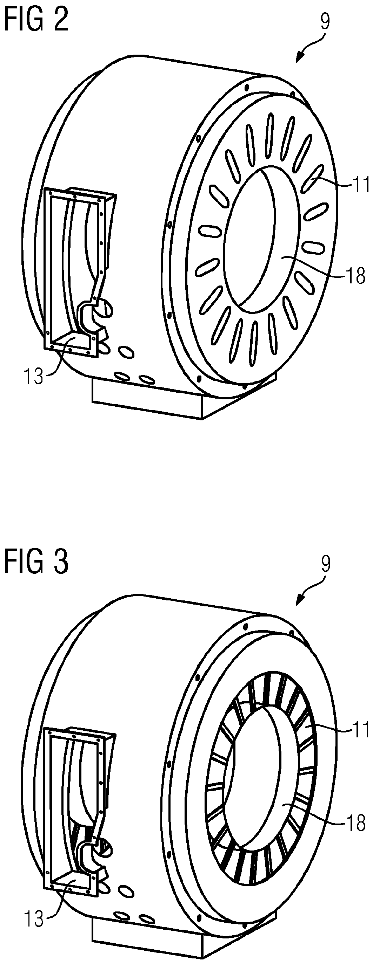

Figur 2 zeigt eine perspektivische Darstellung eines Gehäuses 9 eines Ausführungsbeispiels für eine erfindungsgemäße Anordnung 8. Das Gehäuse 9 weist eine Vielzahl von axialen Lufteintrittsöffnungen 11 und eine radiale Luftaustrittsöffnung 13 auf. In der Mitte des Gehäuses 9 ist eine Öffnung 18 angeordnet, durch die eine Achse 3 eines Drehgestells 4 verlaufen kann.

Figur 3 zeigt eine perspektivische Darstellung eines Gehäuses 9 eines weiteren Ausführungsbeispiels für eine erfindungsgemäße Anordnung 8. Dieses Ausführungsbeispiel unterscheidet sich von dem in Figur 2 gezeigten Ausführungsbeispiel insbesondere durch die Formgebung der Lufteintrittsöffnungen 11.

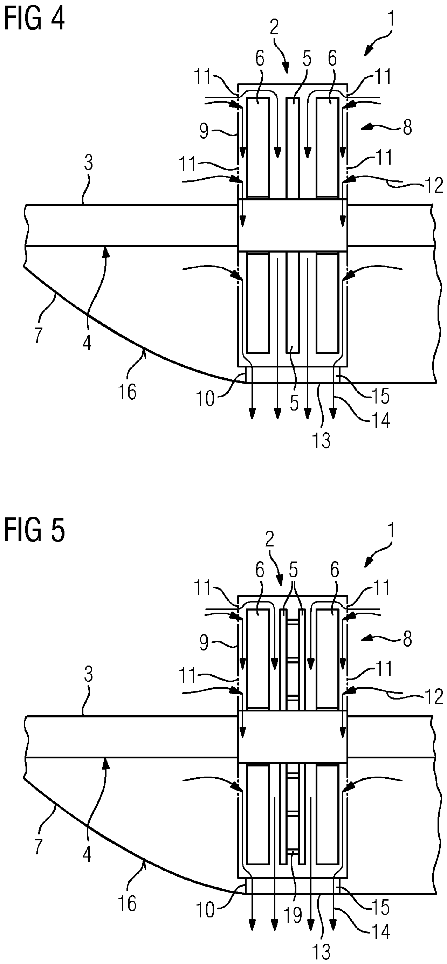

Figur 4 zeigt eine Darstellung eines weiteren Ausführungsbeispiels für ein erfindungsgemäßes Schienenfahrzeug 1. Im Unterschied zu Figur 1 ist ein einziger scheibenförmig ausgebildeter Rotor 5 zwischen zwei Statoren 6 angeordnet.

Figur 5 zeigt eine Darstellung eines weiteren Ausführungsbeispiels für ein erfindungsgemäßes Schienenfahrzeug 1. Im Unterschied zu Figur 4 sind zwei scheibenförmig ausgebildete Rotoren 5 zwischen zwei Statoren 6 angeordnet, wobei die Rotoren 5 über Stege 19 miteinander verbunden, wodurch eine Stabilisierung und eine verbesserte Kühlung der Rotoren 5 erreicht wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (8) zum Kühlen einer rotierenden Wirbelstrombremse (2) eines Schienenfahrzeugs (1), wobei die Anordnung die rotierende Wirbelstrombremse (2) umfasst und diese wenigstens einen mit einer Achse (3) eines Drehgestells (4) des Schienenfahrzeugs (1) drehfest verbundenen Rotor (5) und wenigstens einen stationär an dem Drehgestell (4) angeordneten Stator (6) umfasst, weiter aufweisend:
wenigstens ein die rotierende Wirbelstrombremse (2) umgebend an dem Drehgestell (4) angeordnetes Gehäuse (9), wobei an dem Gehäuse (9) wenigstens eine Lufteintrittsöffnung (11), über die Luft in das Gehäuse (9) eintreten kann, und zumindest eine Luftaustrittsöffnung (13), über die Luft aus dem Gehäuse (9) austreten kann, angeordnet sind, und wobei das Gehäuse (9) derart ausgebildet und an dem Drehgestell (4) angeordnet ist, dass an der Luftaustrittsöffnung (13) ein Teil eines das fahrende Schienenfahrzeug (1) umströmenden Fahrtwindes vorbeiströmt.

2. Anordnung (8) nach Anspruch 1,
**gekennzeichnet durch**
zumindest einen **durch** eine Öffnung (10) an einer das Drehgestell (4) nach außen zumindest teilweise verkleidenden Drehgestellverkleidung (7) des Schienenfahrzeugs (1) ausgebildeten Luftauslass, wobei das Gehäuse (9) derart ausgebildet und an dem Drehgestell (4) angeordnet ist, dass die Luftaustrittsöffnung (13) fluidleitend mit dem Luftauslass verbunden ist.

3. Anordnung (8) nach Anspruch 2,
**dadurch gekennzeichnet, dass**
ein die Luftaustrittsöffnung (13) bildender Abschnitt (15) des Gehäuses (9) bei Anordnung des Gehäuses (9) an dem Drehgestell (4) derart in die an der Drehgestellverkleidung (7) ausgebildete Öffnung (10) eingreift, dass die Luftaustrittsöffnung (13) bündig mit einer dem Drehgestell (4) abgewandten Außenseite der Drehgestellverkleidung (7) abschließt.

4. Anordnung (8) nach einem der Ansprüche 1 bis 3,
**gekennzeichnet durch**
an einer dem Stator (6) abgewandten Seite des Rotors (5) im Wesentlichen radial verlaufend angeordnete Kühlrippen (17).

5. Anordnung (8) nach Anspruch 4,
**dadurch gekennzeichnet, dass**
wenigstens eine Kühlrippe (17) eben ausgebildet und senkrecht zu der Seite des Rotors (5) angeordnet ist, an der die Kühlrippen (17) angeordnet sind.

6. Anordnung (8) nach einem der Ansprüche 1 bis 5,
**dadurch gekennzeichnet , dass**
die Lufteintrittsöffnung (11) derart an dem Gehäuse (9) angeordnet ist, dass sie bei an dem Drehgestell (4) angeordnetem Gehäuse (9) unmittelbar benachbart zu dem Rotor (5) angeordnet ist.

7. Anordnung (8) nach einem der Ansprüche 1 bis 6,
**gekennzeichnet durch**
wenigstens eine Schließeinheit zum wahlweisen Verschließen und Freigeben der Lufteintrittsöffnung (11) oder der Luftaustrittsöffnung (13).

8. Anordnung (8) nach Anspruch 7,
**dadurch gekennzeichnet, dass**
die Schließeinheit wenigstens eine Schließklappe und zumindest eine zum Betätigen der Schließklappe eingerichtete Betätigungseinrichtung aufweist.

9. Schienenfahrzeug (1) mit wenigstens einer Anordnung (8) nach einem der Ansprüche 1 bis 8.

## Claims

1. Arrangement (8) for cooling a rotating eddy current brake (2) of a rail vehicle (1), wherein the arrangement comprises the rotating eddy current brake (2) and this comprises at least one rotor (6) connected in a torque-proof manner with an axle (3) of a bogie (4) of the rail vehicle (1) and at least one stator (6) arranged in a stationary manner on the bogie (4),
further having
at least one housing (9) arranged on the bogie (4) which surrounds the rotating eddy current brake (2), wherein at least one air inlet opening (11), through which air can enter the housing (9), and at least one air outlet opening (13), through which air can leave the housing (9), are arranged on the housing (9), and wherein the housing (9) is embodied and arranged on the bogie (4) in such a manner that part of an airflow flowing around the moving rail vehicle (1) flows past the air outlet opening (13).

2. Arrangement (8) according to claim 1,
**characterised by**
at least one air outlet embodied by an opening (10) on a bogie cladding (7), of the rail vehicle (1), at least partially cladding the bogie (4) on the outside, wherein the housing (9) is embodied and arranged on the bogie (4) such that the air outlet opening (13) is connected in a fluid conducting manner with the air outlet.

3. Arrangement (8) according to claim 2,
**characterised in that**
with the arrangement of the housing (9) on the bogie (4), a section (15) of the housing (9) which forms the air outlet opening (13) engages into the opening (10) embodied on the bogie cladding (7) such that the air outlet opening (13) is flush with an exterior of the bogie cladding (7) which faces away from the bogie (4).

4. Arrangement (8) according to one of claims 1 to 3,
**characterised by**
cooling fins (17) arranged so as to run essentially radially on a side of the rotor (5) facing away from the stator (6).

5. Arrangement (8) according to claim 4,
**characterised in that**
at least one cooling fin (17) is embodied to be flat and is arranged at right angles to the side of the rotor (5) on which the cooling fins (17) are arranged.

6. Arrangement (8) according to one of claims 1 to 5,
**characterised in that**
the air inlet opening (11) is arranged on the housing (9) such that with a housing (9) arranged on the bogie (4) it is arranged immediately adjacent to the rotor (5).

7. Arrangement (8) according to one of claims 1 to 6,
**characterised by**
at least one closing unit for optionally closing and releasing the air inlet opening (11) or the air outlet opening (13).

8. Arrangement (8) according to claim 7,
**characterised in that**
the closing unit has at least one closing flap and at least one actuation facility designed to actuate the closing flap.

9. Rail vehicle (1) with at least one arrangement (8) according to one of claims 1 to 8.

## Revendications

1. Agencement (8) de refroidissement d'un frein (2) tournant à courants de Foucault d'un véhicule (1) ferroviaire, dans lequel l'agencement comprend le frein (2) tournant à courants de Foucault et celui-ci comprend au moins un rotor (5) solidaire en rotation d'un essieu (3) d'un boggie (4) du véhicule (1) ferroviaire et au moins un stator (6) monté fixe sur le boggie (4),
comportant en outre :
au moins une boîte (9) montée sur le boggie (4) en entourant le frein (2) tournant à courants de Foucault, dans lequel il est prévu sur la boîte (9) au moins une ouverture (11) d'entrée d'air,
par laquelle de l'air peut entrer dans la boîte (9), et au moins une ouverture (13) de sortie d'air, par laquelle de l'air peut sortir de la boîte (9), et dans lequel la boîte (9) est constituée et est montée sur le boggie (4) de manière à ce qu'il passe devant l'ouverture (13) de sortie d'air une partie d'un vent relatif passant autour du véhicule (1) ferroviaire en déplacement.

2. Agencement (8) suivant la revendication 1,
**caractérisé par**
au moins une sortie d'air constituée par une ouverture sur un panneautage (7) de boggie, panneautant au moins en partie vers l'extérieur le boggie (4), du véhicule (1) ferroviaire, la boîte (9) étant constituée et montée sur le boggie (4) de manière à ce que l'ouverture (13) de sortie d'air soit en communication fluidique avec la sortie d'air.

3. Agencement (8) suivant la revendication 2,
**caractérisé en ce que**
une partie (15), formant l'ouverture (13) de sortie d'air, de la boîte (9) pénètre, lorsque la boîte (9) est mise sur le boggie, (4) dans l'ouverture (10) constituée sur le panneautage (7) de boggie, de manière à ce que l'ouverture (13) de sortie d'air soit au ras d'une face extérieure opposée au boggie (4) du panneautage (7) de boggie.

4. Agencement (8) suivant l'une des revendications 1 à 3,
**caractérisé par**
des ailettes (17) de refroidissement montées en s'étendant sensiblement radialement sur un côté, opposé au stator (6), du rotor (5).

5. Agencement (8) suivant la revendication 4,
**caractérisé en ce qu'**au moins une ailette (17) de refroidissement est constituée plane et est disposée perpendiculairement au côté du rotor (5) où sont montés les ailettes (17) de refroidissement.

6. Agencement (8) suivant l'une des revendications 1 à 5,
**caractérisé en ce que**
l'ouverture (11) d'entrée d'air est disposée sur la boîte (9) de manière à être, lorsque la boîte (9) est montée sur le boggie (4), au voisinage immédiat du rotor (5).

7. Agencement (8) suivant l'une des revendications 1 à 6,
**caractérisé par**
au moins une unité de fermeture pour au choix fermer et ouvrir l'ouverture (11) d'entrée d'air ou l'ouverture (13) de sortie d'air.

8. Agencement (8) suivant la revendication ,
**caractérisé en ce que**
l'unité de fermeture a au moins un volet de fermeture et au moins un dispositif d'actionnement conçu pour actionner le volet de fermeture.

9. Véhicule (1) ferroviaire ayant au moins un agencement (8) suivant l'une des revendications 1 à 8.
